# EUROPEAN PATENT APPLICATION

(11) **EP 3 023 137 A1**
(43) Date of publication of application: **25.05.2016**
(21) Application number: 15195181.1
(22) Date of filing: 18.11.2015
(51) Int. Cl.: B01D 45/06, B01D 45/12, B01D 45/16, B04C 3/06

(54) **CONTAMINANT SEPARATOR FOR A NITROGEN GENERATION SYSTEM AND METHOD OF REMOVING CONTAMINANTS FROM AN AIRSTREAM**

(30) Priority: 18.11.2014 US 201414546441
(71) Applicant: Hamilton Sundstrand Corporation, Windsor Locks, CT 06096-1010 (US)
(72) Inventor: RUGG, Jared, West Hartford, CT 06110 (US); ARMY Jr., Donald E., Enfield, CT 06082 (US)
(74) Representative: Hull, James Edward

(57) **Abstract**

A contaminant separator (10) for a nitrogen generation system includes a swirl vane chamber (16) defined by a chamber wall (22) and configured to receive an air bleed flow (12). A vane (24) is located within the swirl vane chamber (16) and is configured to direct contaminants heavier than air radially outwardly toward the chamber wall (22). An ejector (26) is defined by an ejector wall (28) and is located downstream of the swirl vane chamber (16) and radially inwardly of the chamber wall (22). A housing (38) surrounds the ejector (26) and the chamber wall (22). A contaminant separating path (34) extends from an inlet comprising an annular gap (32) defined by the chamber wall (22) and the ejector wall (28) to an outlet (50) defined by the housing (38) and the ejector wall (28).

## Description

### BACKGROUND OF THE INVENTION

The subject matter disclosed herein relates to nitrogen generation systems and, more particular, to a contaminant separator for use in such a system, as well as a method of removing contaminants in such a system.

Nitrogen generation systems (NGS) are employed to ingest an airstream and treat the airstream in a manner that produces a flow of nitrogen enriched air (NEA). The NEA may be used for a variety of purposes, including to inert a fuel system, such as on an aircraft, for example. Part of the process of producing the NEA may involve the use of an air separation module. Air separation module performance is known to be sensitive to certain contaminants and therefore benefits from air preparation upstream of the air separation module to remove contaminants from the supplied airstream. Examples of contaminants that are commonly found in the airstream include oil and sand, but other particulate matter may be considered a contaminant that is to be removed from the airstream prior to entry to the air separation module.

Treatment of the airstream prior to routing to the air separation module may be performed with various filtration components, including fiber media coalescing elements. However, if such elements are impacted by an oil slug, the fiber media coalescing elements may be adversely affected. Additionally, these elements have been shown to be sensitive to higher operational temperatures and temperature transients.

### BRIEF DESCRIPTION OF THE INVENTION

According to one aspect of the invention, a contaminant separator for a nitrogen generation system includes a swirl vane chamber defined by an inner surface of a first portion of a chamber wall, the swirl vane chamber configured to receive an air bleed flow. Also included is a vane located within the swirl vane chamber and operatively coupled to the chamber wall, the vane configured to induce vortices of the air bleed flow within the swirl vane chamber to direct contaminants heavier than air radially outwardly toward the inner surface of the chamber wall. Further included is an ejector defined by an ejector wall, the ejector located downstream of the swirl vane chamber and radially inwardly of a second portion of the chamber wall, the second portion of the chamber wall oriented at an angle from the first portion of the chamber wall. Yet further included is a housing surrounding at least a portion of the ejector and at least a portion of the second portion of the chamber wall. Also included is a contaminant separating path having an increasing cross-section area along at least a portion thereof, the contaminant separating path extending from an inlet comprising an annular gap defined by the second portion of the chamber wall and the ejector wall, the contaminant separating path extending to an outlet defined by the housing and the ejector wall.

According to another aspect of the invention, a method of removing at least one contaminant from an air bleed flow in a nitrogen generation system is provided. The method includes routing the air bleed flow into a swirl vane chamber having a plurality of vanes located therein. The method also includes directing the at least one contaminant radially outwardly toward an inner surface of a first portion of a chamber wall based on a swirling airflow induced by the plurality of vanes. The method further includes routing the at least one contaminant into a contaminant separating path having an inlet at a gap defined by a second portion of the chamber wall and an ejector wall, the ejector wall defining an ejector. The method yet further includes collecting the at least one contaminant in a settling chamber located along the contaminant separating path by bringing the at least one contaminant to rest with a decreasing velocity based on an increasing cross-sectional area of the contaminant separating path along at least a portion thereof.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a block diagram of a portion of a nitrogen generation system with a contaminant separator; and
FIG. 2 is a cross-sectional view of the contaminant separator.

The detailed description explains embodiments of the invention, together with advantages and features, by way of example with reference to the drawings.

### DETAILED DESCRIPTION OF THE INVENTION

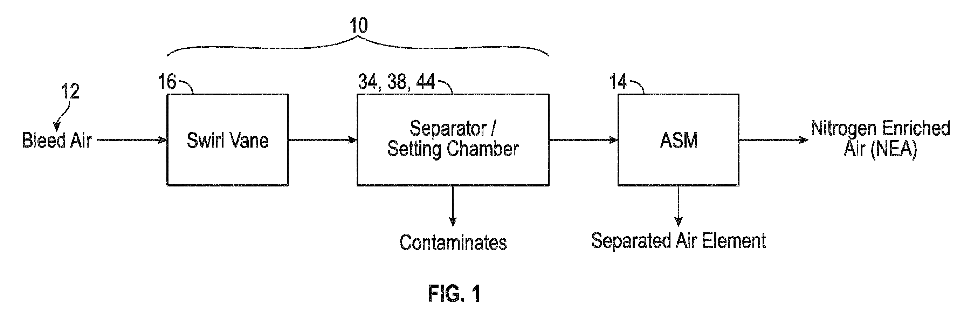

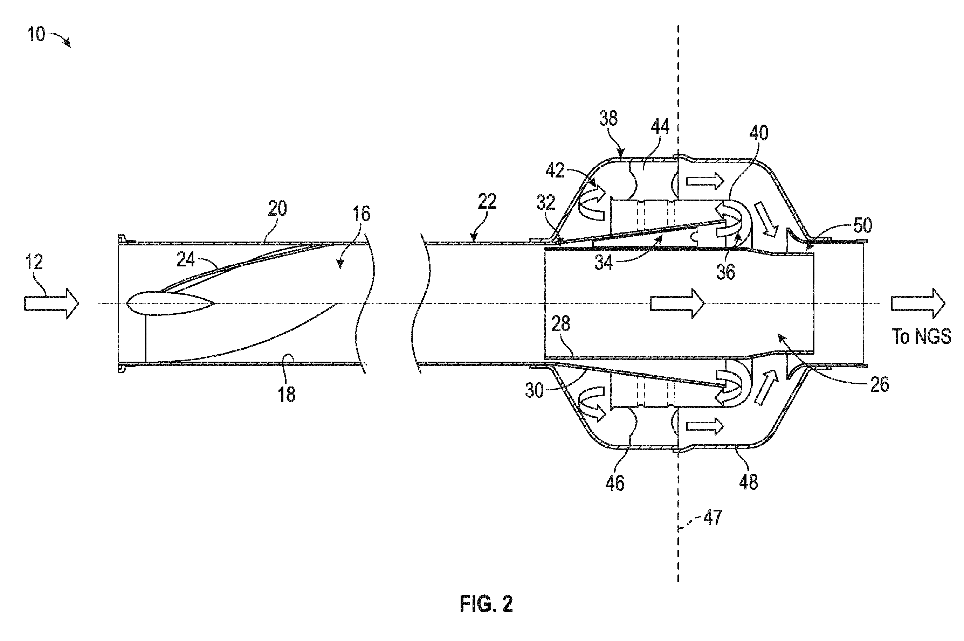

Referring to FIGS. 1 and 2, a contaminant separator is illustrated and referenced generally with numeral 10. The contaminant separator 10 is illustrated schematically in FIG. 1 and in more detail in FIG. 2. The contaminant separator 10 is to be used in conjunction with a nitrogen generation system (NGS). The NGS is configured to ingest an airstream, also referred to herein as an air bleed flow 12, and treat the airstream in a manner that produces a nitrogen enriched air. The nitrogen enriched air may be used for a variety of purposes, including to inert a fuel system, such as on an aircraft, for example, but it is to be appreciated that the embodiments described herein may provide benefits in numerous industries and applications.

To facilitate treatment of the air bleed flow 12, an air separation module 14 is employed to separate various elements of air, such as oxygen and nitrogen. It is important to provide as pure of an airstream as possible to the air separation module 14 to ensure efficient and reliable operation of the air separation module 14. In particular, it is desirable to remove as many contaminants as possible from the air bleed flow 12. Examples of contaminants that are commonly found in an airstream include sand and oil, but the specific contaminants will vary depending on the environment and facility operating conditions.

The contaminant separator 10 is located upstream of the air separation module 14 and is employed to remove contaminants from the air bleed flow 12, as will be appreciated from the description herein. The contaminant separator 10 is arranged to receive the air bleed flow 12, remove contaminants therefrom and route the pure airstream to the air separation module 14 for treatment in the NGS. In particular, the air bleed flow 12 enters a swirl vane chamber 16 of the contaminant separator 10. The swirl vane chamber 16 is defined by an inner surface 18 of a first portion 20 of a chamber wall 22. The first portion 20 of the chamber wall 22 may be in the form of numerous geometries, with one embodiment comprising a substantially cylindrical geometry. Located within the swirl vane chamber 16, and operatively coupled to the inner surface 18 of the chamber wall 22, is at least one, but typically a plurality of vanes 24. As noted, a single vane may be provided and a single vane is illustrated for simplicity. However, it is contemplated that a plurality of vanes are provided in an axially spaced manner within the swirl vane chamber 16. In one embodiment, at least four vanes are provided within the swirl vane chamber, but the precise number of vanes will depend on the particular application. The vane(s) may be formed of sheet metal or another rigid structural material.

The plurality of vanes 24 are tapered to provide strong aerodynamic characteristics for the air bleed flow 12 and have a geometry that induces vortices and a swirling flow profile of the air bleed flow 12. The swirling flow profile inherently directs heavier components, such as particulate matter in the form of contaminants, in a radially outward direction toward the inner surface 18 of the chamber wall 22 due to centrifugal forces.

Downstream of the swirl vane chamber 16 and hence downstream of the plurality of vanes 24 is an ejector 26. The ejector 26 is a chamber defined by an ejector wall 28 that is located radially inward of a second portion 30 of the chamber wall 22. The second portion 30 of the chamber wall 22 is oriented at an angle from the first portion 20 of the chamber wall 22. In particular, the second portion 30 is angled outwardly from a central axis of the contaminant separator 10 and from the first portion 20, as shown in FIG. 2. A slight annular gap between the chamber wall 22 and the ejector wall 28 defines an inlet 32 for a contaminant separating path 34. As previously described, the swirl flow profile within the swirl vane chamber 16 directs the contaminants radially outwardly toward the chamber wall 22, such that substantially all of these contaminants are flowing in close proximity to the first portion 20 of the chamber wall 22 and are positioned to enter the inlet 32 of the contaminant separating path 34. In one embodiment, about 10% of the total airflow is routed to through the gap 32 to the contaminant separating path 34.

Based on the angled nature of the second portion 30 of the chamber wall 22, the contaminant separating path 34 includes an increasing cross-sectional area along the portion of the contaminant separating path 34 defined by the ejector wall 28 and the second portion 30 of the chamber wall 22. The increasing cross-sectional area provides a nozzle effect and decreases the velocity of the airstream flowing therethrough. The velocity is further decreased by a first turn region 36 of the contaminant separating path 34. The first turn region 36 may be oriented at numerous contemplated angles. In one embodiment the first turn region 36 turns the airstream at an angle of substantially 180 degrees.

A housing 38 is coupled to the chamber wall 22 and surrounds at least a portion of the ejector wall 28 and at least a portion of the second portion 30 of the chamber wall 22. The housing 38 includes an inner wall structure 40 that defines portions of the contaminant separating path 34. Specifically, the inner wall structure 40, in combination with the ejector wall 28 and the second portion 30 of the chamber wall, defines the first turn region 36. Additionally, as shown, the inner wall structure 40 and the second portion 30 of the chamber wall 22 define a portion of the contaminant separating path 34 immediately downstream of the first turn region 36. This portion of the contaminant separating path 34 also has an increasing cross-sectional area described above to further decrease the velocity of the airstream, thereby causing more contaminants to settle within the contaminant separating path 34. This settling occurs as the velocity decreases to a magnitude that discontinues fluidic movement of the contaminants.

A second turn region 42 is provided to redirect the flow back in a direction substantially parallel to the main flow path of the air bleed flow 12. As with the first turn region 36, the second turn region 42 is also typically oriented to turn the flow substantially 180 degrees, but both turn regions may be oriented at smaller or larger angles. Within the contaminant separating path 34 is a settling chamber 44 configured to collect contaminants that settle within the contaminant separating path 34. The contours of the contaminant separating path 34 tend to drive the contaminants toward the settling chamber 44 for collection. After time, the contaminants collected in the settling chamber 44 are removed from the housing 38. To facilitate the removal, the housing may include an access port that allows a user to withdraw the contaminants. In one embodiment, the housing 38 is formed of multiple segments that may be easily disassembled and reassembled to provide a user access to the settling chamber 44. In the illustrated embodiment, a first axial segment 46 and a second axial segment 48 are coupled to each other proximate axial plane 47 and configured to be repeatedly removable and coupleable with respect to each other. The manner in which the first axial segment 46 and the second axial segment are coupled may vary. For example, a bolted flange may facilitate coupling or a V-band, but any other suitable coupling process may be employed.

As the airstream completes its path through the contaminant separating path 34, it is expelled through an outlet 50. In the illustrated embodiment, the outlet 50 is defined by the housing 38 and the ejector wall 28, but it is to be appreciated that the chamber wall 22 may extend further rearward to partially define the outlet 50. In the housing embodiment of two axial segments, the outlet is defined by the second axial segment 48 and the chamber wall 22. The ejector 26 provides a nozzle effect to accelerate the now-cleaned air through the outlet 50 by drawing it out to rejoin the main flow. Upon expulsion through the outlet 50, the airstream is reunited with the main flow path of the air bleed flow 12 for routing of the overall airstream to the air separation module 14 for processing in the NGS.

Advantageously, the embodiments of the contaminant separator 10 described herein guarantee continued contaminant filtration performance after an oil slug impact event, in contrast to other filtration devices, such as a fiber media coalescers, while also being able to produce strong filtration efficiency. Additionally, the contaminant separator 10 is able to withstand high operational temperatures and large temperature transients.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A contaminant separator for a nitrogen generation system comprising:
a swirl vane chamber defined by an inner surface of a first portion of a chamber wall, the swirl vane chamber configured to receive an air bleed flow;
a vane located within the swirl vane chamber and operatively coupled to the chamber wall, the vane configured to induce vortices of the air bleed flow within the swirl vane chamber to direct contaminants heavier than air radially outwardly toward the inner surface of the chamber wall;
an ejector defined by an ejector wall, the ejector located downstream of the swirl vane chamber and radially inwardly of a second portion of the chamber wall, the second portion of the chamber wall oriented at an angle from the first portion of the chamber wall;
a housing surrounding at least a portion of the ejector and at least a portion of the second portion of the chamber wall; and
a contaminant separating path having an increasing cross-section area along at least a portion thereof, the contaminant separating path extending from an inlet comprising an annular gap defined by the second portion of the chamber wall and the ejector wall, the contaminant separating path extending to an outlet defined by the housing and the ejector wall.

2. The contaminant separator of claim 1, further comprising a plurality of vanes located within the swirl vane chamber.

3. The contaminant separator of claim 2, wherein the plurality of vanes comprises at least four vanes.

4. The contaminant separator of any of claims 1 to 3, wherein the vane is tapered.

5. The contaminant separator of any preceding claim, wherein the vane comprises sheet metal.

6. The contaminant separator of any preceding claim, wherein the housing comprises a plurality of segments.

7. The contaminant separator of claim 6, wherein the plurality of segments of the housing comprises a first axial segment and a second axial segment configured to be repeatedly removable and coupleable for removal of contaminant therein.

8. The contaminant separator of any preceding claim, wherein the contaminant separating path comprises at least one turn region.

9. The contaminant separator of claim 8, wherein the at least one turn region comprises at least one 180 degree turn.

10. The contaminant separator of claim 8, wherein the at least one turn region comprises two 180 degree turn regions.

11. The contaminant separator of any preceding claim, wherein the housing comprises a settling chamber for collection of contaminant.

12. A nitrogen generation system, comprising:
an air separation module; and
the contaminant separator of any preceding claim located upstream of the air separation module.

13. A method of removing at least one contaminant from an air bleed flow in a nitrogen generation system using the contaminant separator of claim 11, the method comprising:
routing the air bleed flow into the swirl vane chamber;
directing the at least one contaminant radially outwardly toward the inner surface of the first portion of the chamber wall based on a swirling airflow induced by the vane;
routing the at least one contaminant into the contaminant separating path; and
collecting the at least one contaminant in the settling chamber by bringing the at least one contaminant to rest with a decreasing velocity based on the increasing cross-sectional area of the contaminant separating path.

14. A method of removing at least one contaminant from an air bleed flow in a nitrogen generation system comprising:
routing the air bleed flow into a swirl vane chamber having a plurality of vanes located therein;
directing the at least one contaminant radially outwardly toward an inner surface of a first portion of a chamber wall based on a swirling airflow induced by the plurality of vanes;
routing the at least one contaminant into a contaminant separating path having an inlet at a gap defined by a second portion of the chamber wall and an ejector wall, the ejector wall defining an ejector; and
collecting the at least one contaminant in a settling chamber located along the contaminant separating path by bringing the at least one contaminant to rest with a decreasing velocity based on an increasing cross-sectional area of the contaminant separating path along at least a portion thereof.

15. The method of claims 13 or 14, wherein the at least one contaminant comprises sand and/or oil.
